# FASCICULE DE BREVET EUROPEEN

(11) **EP 1 051 436 B1**
(45) Date de publication et mention de la délivrance du brevet: **05.11.2003**
(21) Numéro de dépôt: 99901660.3
(22) Date de dépôt: 29.01.1999
(51) Int. Cl.: C08F 287/00, C08F 297/02, C08F 283/06

(54) **NOUVEAUX COPOLYMERES TENSIOACTIFS A BASE DE METHYLIDENE MALONATE**
NEUE TENSIDCOPOLYMERE AUF BASIS VON METHYLIDENMALONAT
NOVEL SURFACTANT COPOLYMERS BASED ON METHYLIDENE MALONATE

(30) Priorité: 29.01.1998 FR 9801001
(43) Date de publication de la demande: 15.11.2000
(73) Titulaire: Virsol, 75116 Paris (FR)
(72) Inventeur: BRU-MAGNIEZ, Nicole, F-75016 Paris (FR); LARRAS, Virginie, F-68100 Mulhouse (FR); RIESS, Gérard, F-68200 Mulhouse (FR); BRETON, Pascal, F-45510 Tigy (FR); COUVREUR, Patrick, F-91140 Villebon sur Yvette (FR); ROQUES-CARMES, Claude, F-25000 Besançon (FR)
(74) Mandataire: Hubert, Philippe
(86) Numéro de dépôt international: FR9900185
(87) Numéro de publication internationale: WO99038898

(56) Documents cités:
- EP-A- 0 583 955
- WO-A-96/25954

## Description

La présente invention concerne généralement une nouvelle famille de copolymères tensioactifs biocompatibles présentant un large spectre d'utilisations, notamment dans le domaine pharmaceutique et pour la synthèse de matériaux à l'état dispersé ainsi que le traitement de surface de matériaux ou biomatériaux.

L'invention a plus particulièrement pour objet des copolymères biocompatibles tensioactifs comportant une ou plusieurs séquences à caractère hydrophobe constituées majoritairement d'unités récurrentes ou non répondant à la formule générale définie ci-après, formant en particulier un poly(méthylidène malonate).

On connaît depuis longtemps des copolymères tensioactifs formés d'une ou plusieurs séquences présentant un caractère hydrophile et une ou plusieurs séquences présentant un caractère hydrophobe.

En particulier, les produits constitués de séquences polyoxyéthylène à caractère hydrophile et de séquences polyoxypropylène à caractère hydrophobe et commercialisés sous la dénomination PLURONIC® sont couramment utilisés pour la préparation de compositions à usage cosmétique ou pharmaceutique.

Le principal inconvénient de ces copolymères provient du fait qu'ils ne comportent aucune séquence biodégradable.

Des copolymères tensioactifs comportant des séquences biodégradables ont déjà été décrits par exemple dans le document EP 583955. Il s'agit de copolymères à blocs contenant des unités d'oxyde d'éthylène et des unités dérivées d'acides aminés en tant que séquences hydrophobes.

La biodégradabilité de ces copolymères connus s'accompagne d'une coupure de la chaîne principale.

Le document WO-A-9625954 décrit généralement l'utilisation de poly(méthylidènemalonate) pour la préparation de microcapsules contenant un gaz, destinées au diagnostic par ultrasons.

Il a été découvert, et ceci constitue le fondement de la présente invention, une nouvelle famille de copolymères tensioactifs biocompatibles et biodégradables par un mécanisme de bioérosion qui ne modifie pas sensiblement le degré de polymérisation dudit copolymère.

Plus précisément, les copolymères conformes à l'invention sont susceptibles de se dégrader par voie chimique ou biochimique par coupure des substituants latéraux constituant les séquences à caractère hydrophobe et cette bioérosion s'accompagne avantageusement du passage d'un copolymère présentant les caractéristiques d'un tensioactifà un copolymère entièrement hydrophile de même degré de polymérisation que le polymère de départ.

Les copolymères conformes à la présente invention présentent de très nombreux avantages par rapport aux copolymères tensioactifs connus à ce jour, qui résultent de la structure chimique particulière de leurs séquences à caractère hydrophobe.

Ces séquences permettent notamment de fournir des copolymères présentant des structures variées, à blocs ou greffées, ces dernières étant difficilement accessibles dans le cas des copolymères décrits par exemple dans le document EP 583 955.

La grande réactivité, aussi bien en polymérisation anionique que radicalaire, des monomères utilisés pour réaliser ces séquences à caractère hydrophobe facilite l'ajustement des masses moléculaires de ces séquences et par conséquent des propriétés des copolymères.

Enfin, les copolymères conformes à la présente invention présentent, selon la structure chimique de leurs séquences à caractère hydrophobe, des cinétiques de dégradation variées et conviennent donc à un large spectre d'applications.

Ainsi, selon un premier aspect, la présente demande vise à couvrir des copolymères biocompatibles du type comportant au moins une séquence présentant un caractère hydrophile et au moins une séquence présentant un caractère hydrophobe, caractérisés en ce que ladite séquence à caractère hydrophobe est formée :
- soit d'un homopolymère constitué d'unités récurrentes répondant à la formule générale (I) suivante : 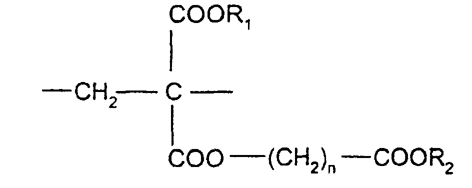 dans laquelle :
   - R₁ représente un groupe alkyle ayant de 1 à 6 atomes de carbone ou un groupe (CH₂)ₘ- COOR₃ dans lequel m est un nombre entier compris entre 1 et 5 et R₃ représente un groupe alkyle ayant de 1 à 6 atomes de carbone ;
   - R₂ représente un groupe alkyle ayant de 1 à 6 atomes de carbone ; et
   - n est un nombre entier compris entre 1 et 5 ;
- soit d'un copolymère statistique constitué d'unités récurrentes différentes répondant à la formule (I) telle que définie précédemment ;
- soit enfin d'un copolymère statistique majoritairement constitué d'unités répondant à la formule (I) telle que définie précédemment.

Avantageusement, la séquence à caractère hydrophobe précitée sera formée d'un homopolymère constitué d'unités récurrentes répondant à la formule (I) telle que définie précédemment.

Sans sortir du cadre de l'invention, cette séquence à caractère hydrophobe peut être également formée d'un copolymère statistique constitué d'unités récurrentes différentes répondant à la formule (I) telle que définie précédemment ou bien encore d'un copolymère statistique majoritairement constitué d'unités répondant à la formule (I) telle que définie précédemment, c'est à dire constitué pour au moins 50 %, exprimé en proportion molaire, de telles unités, les autres unités pouvant être formées de monomères acryliques, vinyliques, maloniques copolymérisables avec les unités méthylidène malonate de formule (I).

Selon un mode de réalisation actuellement préféré de l'invention, la séquence à caractère hydrophobe précitée est constituée d'unités récurrentes répondant à la formule générale (I) précitée dans laquelle :
R₁ représente un groupe alkyle ayant de 1 à 6 atomes de carbone ;
R₂ représente un groupe alkyle ayant de 1 à 6 atomes de carbone ; et
n est un nombre égal à 1.

Selon un mode de réalisation particulièrement préféré de l'invention, la séquence à caractère hydrophobe précitée est formée d'un homopolymère constitué d'unités récurrentes répondant à la formule :

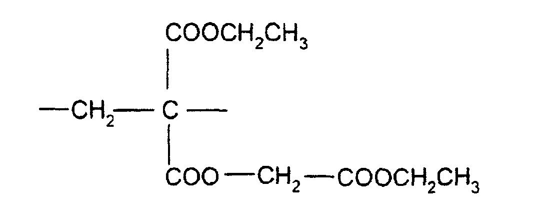

Selon une caractéristique particulière, la séquence à caractère hydrophile des copolymères biocompatibles conformes à la présente invention est choisie parmi un poly(oxyéthylène), un poly(alcoolvinylique), une poly(vinylpyrrolidone), un poly(N-2 hydroxypropyl méthacrylamide), un poly(hydroxyéthyl méthacrylate), un poly(amino acide) hydrophile tel qu'une polylysine, un polysaccharide, et sera de préférence constituée d'un poly(oxyéthylène).

Les copolymères conformes à la présente invention peuvent présenter des structures variées, à blocs, de préférence di-blocs ou tri-blocs, ou greffées.

Ces copolymères peuvent être caractérisés de façon générale:
- par une teneur pondérale en séquences à caractère hydrophobe comprise entre 5 et 95 %, de préférence entre 10 et 90 % ;
- par une masse molaire totale des séquences à caractère hydrophobe comprise entre 1.000 et 80.000 g/mol, et de préférence entre 1.000 et 50.000 g/mol.

Les copolymères conformes à la présente invention peuvent être préparés par des techniques de polymérisation classiques bien connues de l'homme de métier.

Parmi ces techniques, on utilisera de préférence la polymérisation par voie anionique, la polymérisation par voie radicalaire, ou encore la technique de couplage des séquences précurseurs du copolymère, ces séquences ayant été au préalable fonctionnalisées en bout de chaîne de façon adéquate.

La polymérisation par voie anionique convient plus particulièrement à la préparation de copolymères à blocs.

Elle comporte l'addition séquentielle des monomères et permet d'obtenir des copolymères de structure parfaitement définie, les quantités d'amorceurs et de monomères engagés permettant de contrôler le degré de polymérisation de chacune des séquences.

Un copolymère à blocs peut être ainsi obtenu :
- soit par polymérisation anionique d'un premier monomère et réaction sur la chaîne en croissance d'un second monomère ;
- soit par activation d'un polymère précurseur qui servira d'arnorceur à la polymérisation d'un second monomère.

Les agents d'amorçage susceptibles d'être utilisés dans le cadre de ces polymérisations par voie anionique seront généralement :
- d'une part, les dérivés organométalliques comme le butyllithium et en particulier le diphénylhexyllithium ;
- d'autre part, des alcoolates et en particulier les alcoolates macromoléculaires tel qu'un alcoolate de POE qui peuvent être généré par activation d'une fonction hydroxy à l'aide de cumylpotassium, de diphénylméthylpotassium, de naphtalène potassium.

La polymérisation par voie anionique sera généralement réalisée dans un solvant compatible avec les diverses séquences du copolymère.

Dans le cas où la séquence à caractère hydrophile est constituée d'un poly(oxyéthylène) et la séquence à caractère hydrophobe est constituée d'un poly(méthylidène malonate), les copolymères à blocs selon l'invention seront préparés de préférence par polymérisation anionique successive de l'oxyde d'éthylène puis du méthylidène malonate ou par activation d'un précurseur polyoxyéthyléné monohydroxylé commercial et polymérisation anionique subséquente de la séquence poly(méthylidène malonate).

D'une façon générale, on utilisera de préférence le tétrahydrofurane comme solvant de polymérisation, ce produit permettant de travailler en milieu homogène et influençant favorablement la cinétique de polymérisation.

En ce qui concerne les monomères de départ, les méthylidène malonate pourront être préparés par exemple en suivant le procédé décrit dans le brevet EP 283364 correspondant aux brevets US 4 931 584 et US 5 142 098, et seront généralement dégazés sous vide de pompe à palettes jusqu'à poids constant pour éliminer l'inhibiteur de polymérisation (SO₂).

Les monomères utilisés pour la préparation des séquences hydrophiles seront généralement des produits commerciaux.

La technique de couplage convient également plus particulièrement à la préparation de copolymères à blocs.

Cette réaction est généralement réalisée à partir d'homopolymères présynthétisés et fonctionnalisés, en présence d'un agent de couplage et éventuellement d'un agent d'activation, dans un solvant approprié.

Dans le cas de la préparation des copolymères préférés selon l'invention, dont la séquence hydrophile est constituée d'un poly(oxyéthylène) et la séquence hydrophobe est constituée d'un poly(méthylidène malonate), on utilisera avantageusement un homopolymère du poly(oxyéthylène) fonctionnalisé par un groupement α-carboxy et un homopolymère du poly(méthylidène malonate) fonctionnalisé par un groupement α-hydroxy.

L'homopolymère du poly(oxyéthylène) fonctionnalisé par un groupement α-carboxy peut être obtenu par exemple par transformation par l'anhydride succinique d'un poly(oxyéthylène) fonctionnalisé par un groupement α-hydroxy commercial.

L'homopolymère du poly(méthylidène malonate) fonctionnalisé par un groupement α-hydroxy peut être obtenu directement par synthèse anionique en milieu aqueux ou par synthèse anionique dans un solvant en utilisant une solution aqueuse de soude comme amorceur de la polymérisation.

En tant qu'agent de couplage particulièrement adapté à cette polymérisation, on utilisera avantageusement le dicyclohexylcarbodiimide (DCCI).

La réaction de couplage peut être éventuellement activée par catalyse basique et se déroulera généralement dans un solvant compatible avec les homopolymères, comme en particulier le dichlorométhane dans le cas particulier des copolymères préférés de l'invention.

La polymérisation par voie radicalaire convient plus particulièrement à la préparation de copolymères greffés.

Cette polymérisation est généralement réalisée à partir d'un macromonomère, c'est à dire d'un oligomère portant à l'une de ses extrémités un groupement éthylénique polymérisable par voie radicalaire et susceptible de réagir avec un monomère pour former un copolymère à structure greffée.

Cette polymérisation sera généralement réalisée en présence d'un amorceur dans un solvant approprié.

Dans le cas de la préparation des copolymères préférés selon l'invention, dont la séquence hydrophile est constituée d'un poly(oxyéthylène) divers macromomères fonctionnalisés pourront être utilisés.

On préférera plus particulièrement utiliser un macromonomère de poly(oxyéthylène) fonctionnalisé par un groupement méthacryloyle.

Un tel produit peut être commercial (Aldrich) et sera constitué par exemple d'une chaîne de poly(oxyéthylène) de masse molaire comprise entre 308 et 440 g/mol, ou sera préparé à partir d'un poly(éthylèneglycol)monométhyléther commercial par couplage avec l'acide méthacrylique dans le dichlorométhane pour former une fonction terminale méthoxy.

On peut encore préparer un tel macromonomère par activation d'un poly(oxyéthylène) et réaction subséquente sur le chlorure de méthacryloyle.

Les copolymères à structures greffées selon l'invention, peuvent également être préparés par transestérification d'un poly(oxyéthylène) monométhyléther sur des chaînes latérales esters d'un poly(méthylidène malonate) pré-synthétisé.

Cette transestérification sera généralement réalisée avec de l'alcool en présence d'un catalyseur à température élevée.

D'une façon générale, les copolymères conformes à la présente invention ont un large spectre d'applications en tant que tensioactifs.

Ces copolymères permettent en particulier de réduire la tension superficielle de l'eau et la tension interfaciale d'un système eau-solvant organique non miscible à l'eau.

Ces copolymères permettent encore de préparer des systèmes micellaires en milieu aqueux, notamment utiles comme vecteurs de principes actifs.

Ces copolymères permettent également de préparer ou de stabiliser des émulsions simples de type eau-dans-huile ou huile-dans-eau.

Ces copolymères permettent encore d'encapsuler des substances actives variées, en particulier les substances à usage thérapeutique.

Les copolymères conformes à la présente invention trouvent encore application comme colloïdes protecteurs pour la préparation ou la stabilisation de nano particules.

Ils seront particulièrement utiles lorsque ces particules sont réalisées à partir de polymères comportant des unités récurrentes identiques à celles de leurs séquences à caractère hydrophobe, ce qui facilite comme on le comprend, l'ancrage du copolymère en surface de ces particules tout en leur conférant un caractère biocompatible et hydrophile du fait de la présence dans ledit copolymère d'au moins une séquence hydrophile biocompatible.

Les copolymères conformes à l'invention peuvent également être utilisés comme agents de traitement de surface de matériaux ou de biomatériaux en particulier pour conférer un caractère hydrophile aux surfaces traitées par ancrage desdits copolymères ou pour minimiser l'adhésion interfaciale avec des tissus animaux, des cellules ou des biomolécules, lorsque ces matériaux ou biomatériaux sont susceptibles d'entrer en contact avec lesdites cellules ou biomolécules.

Les copolymères conformes à la présente invention peuvent également être utilisés pour la fabrication de particules susceptibles d'être utilisées comme agents de contraste.

Les copolymères conformes à la présente invention peuvent encore être utilisés comme matériaux biocompatibles, par exemple sous forme de films ou de pièces moulées, ainsi que pour le traitement de surface de structures implantaires et pour minimiser ou favoriser les mécanismes d'adsorption interfaciaux.

La présente invention va maintenant être illustrée par les exemples non limitatifs suivants. Dans ces exemples, les abréviations suivantes ont été utilisées :
- **OE :**: oxyde d'éthylène
- **POE :**: poly(oxyéthylène)
- **MM 2.1.2 :**: méthylidène malonate répondant à la formule : 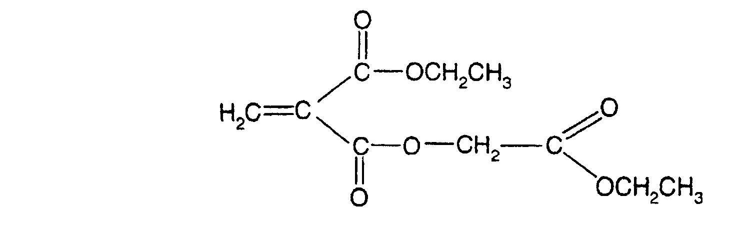
- encore dénommé :: 1-éthoxycarbonyl-1-éthoxycarbonylméthylène-oxycarbonyléthène
- **MM 2.3.2**:: méthylidène malonate répondant à la formule : 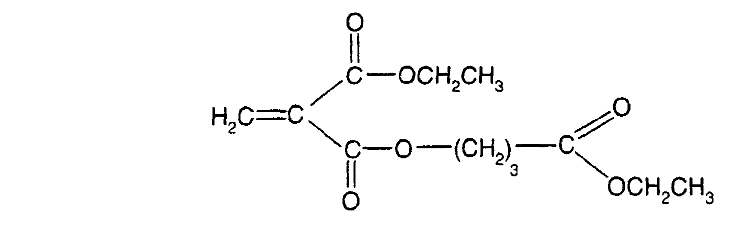
- **PMM 2.1.2 :**: polymère constitué d'unités monomères récurrentes répondant à la formule 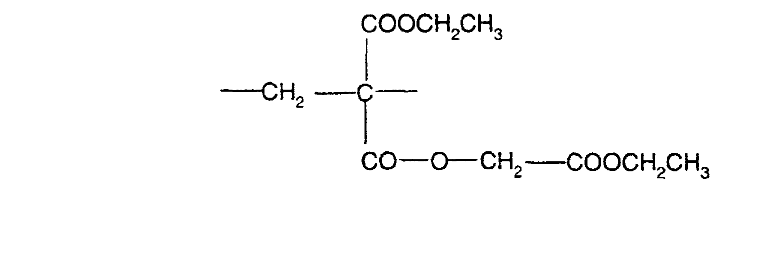
- **PMM 2.3.2** :: polymère constitué d'unités monomères récurrentes répondant à la formule 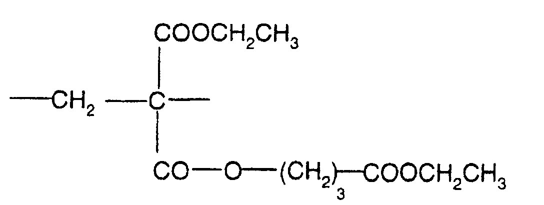
- **THF** :: Tétrahydrofurane
- **I.P. :** :: Indice de polymolécularité
- **DCCI** :: Dicyclohexylcarbodiimide
- **DMAP** :: Diméthylaminopyridine
- **PEG** :: Polyéthylène glycol

### Exemple 1 : Préparation d'un copolymère à blocs selon l'invention par voie anionique

Un copolymère à blocs POE-PMM 2.1.2 a été obtenu par polymérisation successive des deux monomères en commençant par la préparation du bloc POE, par la mise en oeuvre du protocole expérimental suivant.

Le réacteur dans lequel est effectué la polymérisation (250 ml) est raccordé à une rampe à vide permettant de travailler sous vide poussé et de s'affranchir des impuretés protiques.

Le solvant (THF, 150 ml) purifié de toute trace d'humidité est cryodistillé dans le réacteur à - 70°C.

L'amorceur (Terbutanolate de potassium (0.1N/THF) ; 10 ml) est ensuite ajouté à l'aide d'une seringue au travers d'un septum.

L'oxyde d'éthylène (5 g) est alors introduit par cryodistillation.

La polymérisation s'effectue à température ambiante pendant 48 heures. Après cette durée, un prélèvement permet de contrôler, par chromatographie par perméation de gel, la masse molaire (4.000 g/mol) et l'indice de polymolécularité (1.13) de la première séquence.

Le MM 2.1.2 (0,5 ml) fraîchement dégazé sous vide pour enlever le SO₂ utilisé comme inhibiteur de polymérisation, est alors rajouté rapidement et en une seule fois à température ambiante.

Après 5 heures, le copolymère est désactivé par ajout de méthanol et précipité dans l'éther diéthylique.

5 motifs dérivés de MM 2.1.2 sont fixés au POE, ce qui correspond à une masse molaire pour le PMM 2.1.2 de 1.150 g/mol.

L'analyse thermique du copolymère révèle une température de transition vitreuse de - 16°C ainsi qu'un pic de fusion de 45°C (ΔH = 117 J/g).

### Exemple 2 : Préparation de copolymères à blocs selon l'invention par voie anionique

Le protocole expérimental est le même que celui décrit pour l'exemple 1.

Les réactifs suivants ont été utilisés :
Solvant : THF 100 ml
Oxyde d'éthylène (OE) : 3 g
Amorceur : diphénylméthyle potassium (0.25 N/THF) : 3 ml
MM 2.1.2 : soit 2 ml ou soit 3,2 ml

Le POE synthétisé a une masse molaire de 3.600 g/mol (I.P = 1.12).

L'ajout de la seconde séquence à température ambiante conduit à un copolymère de masse molaire finale de 5.900 g/mol (pour 2 ml de monomère ajouté) et 9.300 g/mol (pour 3,2 ml de monomère ajouté), c'est à dire ayant incorporé respectivement 10 et 25 motifs MM 2.1.2, ce qui correspond à une masse molaire totale pour le PMM 2.1.2 de 2.300 et 5.750 g/mol respectivement.

L'analyse thermique du copolymère permet de mettre en évidence la température de transition vitreuse du copolymère qui est respectivement de -18° C pour le premier copolymère et 6°C pour le second copolymère, ainsi que le pic de fusion aux températures respectives de 33° C et 39°C (ΔH de 53 et 63 J/g).

### Exemple 2A : Préparation d'un copolymère à blocs selon l'invention par voie anionique

Le protocole expérimental est le même que celui décrit pour les exemples 1 et 2.

Les réactifs suivants ont été utilisés :
Solvant : THF 100 ml
Oxyde d'éthylène (OE) : 3 g
Amorceur : diphénylméthylpotassium (0,32M/THF) : 2,7 ml
MM 2.3.2 : 2 ml

Le POE, synthétisé de manière classique a une masse molaire de 3.500 g/mol (I.P= 1,10).

Le second monomère, préalablement dilué dans quelques ml de THF anhydre, est alors rapidement ajouté sur l'alcoolate à température ambiante et conduit à un copolymère incorporant 5 motifs MM 2.3.2 correspondant à une masse molaire pour le PMM 2.3.2 de 1.290 g/mol.

### Exemple 2B : Préparation de copolymères à blocs selon l'invention par voie anionique

Le protocole expérimental est le même que celui décrit pour l'exemple 2A.

Les réactifs suivants ont été utilisés :
Solvant : THF 100 ml
Oxyde d'éthylène (OE) : 4 g
Amorceur : diphénylméthylpotassium (0,4M/THF) : 2,5 ml
MM 2.1.2 : 1,5 ml
MM 2.3.2 : 2 ml

Le POE, synthétisé de manière déjà décrite dans les exemples précédents a une masse molaire de 11.000 g/mol (I.P = 1,11).

Le mélange des deux monomères (MM 2.1.2 ET MM 2.3.2) fraîchement dégazés sous vide est alors rapidement rajouté à température ambiante sur la fonction alcoolate du bloc POE.

Après désactivation, le copolymère est précipité dans l'éther diéthylique.

Les analyses RMN et GPC indiquent un pourcentage massique respectif de 7 % pour le MM 2.1.2 (4 motifs) et 13 % pour le MM 2.3.2 (7 motifs).

### Exemple 3 : Préparation d'un copolymère à blocs selon l'invention par voie anionique

Un copolymère POE-PMM 2.1.2 a été obtenu par réamorçage d'un précurseur POE préformé de longueur déterminée, puis par réaction de l'alcoolate obtenu sur le méthylidène malonate, par la mise en oeuvre du protocole suivant :

Du PEG monohydroxylé (PEG monométhyléther ALDRICH Mn = 2.000 g/mol : 1.2 g) est séché sous vide poussé dans un réacteur de polymérisation raccordé à la rampe à vide.

100 ml de THF anhydre sont cryodistillés sur le polymère placé à - 70° C.

La température est alors remontée progressivement à 20° C pour permettre la solubilisation du polymère.

La juste quantité de dérivé organométallique (Diphénylhexyllithium (0.056 M dans le THF) : 10.7 ml) est alors ajoutée goutte à goutte par l'intermédiaire d'un septum dans le réacteur.

La solution se décolore presque instantanément et après l'ajout, la solution est jaune pâle et atteste de la présence d'anions d'alcoolates.

Après 3 heures de réaction, le MM 2.1.2 (3,7 g) fraîchement dégazé sous vide et dilué dans 10 ml de THF anhydre est ajouté rapidement dans le réacteur à température ambiante. Le milieu se décolore en quelques secondes.

Après 5 heures de polymérisation, le copolymère est terminé par ajout de 5 ml de méthanol. Le milieu réactionnel est concentré puis le polymère est récupéré après précipitation dans l'éther, lavage à l'éther et séchage sous vide.

### Exemple 3A : Préparation d'un copolymère à blocs selon l'invention par voie anionique

Un copolymère tribloc PMM 2.1.2-POE-PMM 2.1.2 a été obtenu par réamorçage d'un précurseur POE dihydroxylé de masse molaire prédéterminée, puis par réaction du dialcoolate obtenu sur le méthylidène malonate, par la mise en oeuvre d'un protocole analogue à celui de l'exemple 3.

Les réactifs suivants ont été utilisés :
Solvant : THF, 100 ml
POE dihydroxylé (Fluka) 2.000 g/mol : 2 g
Amorceur : diphénylhexyllithium (0,145M/THF) : 13,8 ml
MM 2.1.2 : 3 ml.

La quantité d'organolithien ajouté permet la métallation des deux extrémités hydroxylées du POE et de ce fait, l'amorçage puis la polymérisation de la séquence MM 2.1.2 de part et d'autre de la séquence hydrophile.

5 heures après l'ajout du MM 2.1.2, le copolymère est terminé par introduction de 5 ml de méthanol dans le milieu réactionnel. Après concentration de ce dernier, le copolymère est récupéré par reprécipitation dans l'éther.

La composition finale en MM 2.1.2 est de 81,6 % en masse dans le copolymère, soit une succession de 19 motifs MM 2.1.2, 45 motifs OE puis de nouveau 19 motifs MM 2.1.2.

### Exemple 4 : Préparation d'un copolymère à blocs selon l'invention par réaction de couplage

Un copolymère à blocs selon l'invention a été obtenu par réaction de couplage entre un homopolymère oxyéthyléné fonctionnalisé en α par un groupement carboxy (Mn = 5.000 g/mol) et un homopolymère du MM 2.1.2 fonctionnalisé en α par un groupement hydroxy.

La terminaison OH de la séquence PMM 2.1.2 α hydroxy fonctionnalisée peut être obtenue :
- soit par la synthèse du polymère en milieu aqueux (voir Lescure F. et al ; Pharmaceutical Research, 11, 9, 1270-1276, 1994) ;
- soit par l'utilisation d'une solution aqueuse de soude comme amorceur de la polymérisation du MM 2.1.2 en milieu THF ou acétone.

Un équivalent de chacun des homopolymères est solubilisé dans du dichlorométhane ; on ajoute ensuite un équivalent de DCCI et 0,3 équivalent de DMAP en solution dans le dichlorométhane.

Après 10 heures de réaction à température ambiante, le trouble caractéristique de la dicyclohexylurée (DCHU) est éliminé par filtration.

Le mélange est ensuite lavé à l'acide (élimination de la DCHU résiduelle et de la DMAP) puis neutralisé avec une solution de carbonate de sodium.

Le copolymère s'obtient ensuite par précipitation dans l'eau, non solvant de la séquence majoritaire à savoir le PMM 2.1.2.

### Exemple 5 : Préparation d'un copolymère greffé selon l'invention par voie radicalaire

Un copolymère greffé selon l'invention a été obtenu à partir des deux homopolymères suivants :
- PEG monométhylether ALDRICH (Mn = 2.000 g/mol) : 0,1 g
- PMM 2.1.2 (Mn = 30.000 g/mol) : 0.27 g
en suivant le protocole expérimental décrit ci-après.

Les deux homopolymères secs sont dissous dans le toluène.

Le mélange est dégazé sous azote et porté à 60°C.

Le catalyseur (sel de 1-hexanol, 2-ethyl, titanate (4+), Tyzor TOT (Du Pont)) dilué dans un peu de toluène est alors ajouté au milieu réactionnel.

La synthèse se poursuit pendant 12 heures à 60°C.

Le brut de réaction est ensuite concentré puis reprécipité dans l'eau pour séparer le copolymère et le PMM 2.1.2 non transéstérifié du PEG non fixé.

### Exemple 6 : Préparation d'un copolymère greffé selon l'invention par voie radicalaire

Un copolymère greffé selon l'invention a été obtenu à partir des deux produits suivants :
- PEG méthacrylate (macromonomère), Mn = 2.000 g/mol : 0.71 g
- MM 2.1.2 : 0.62 g

Dans un ballon tricol sont introduits les deux comonomères ainsi que le solvant (THF, 30 ml).

L'ensemble est chauffé à 40°C.

L'amorceur (percarbonate de cyclohexyle (1 % molaire par rapport au total des monomères engagés)) est ensuite introduit en solution dans du THF.

La synthèse se poursuit 18 heures à 40°C.

Le solvant de réaction est évaporé et le copolymère formé est encore en mélange avec une fraction de macromonomère résiduel.

L'obtention effective de copolymère peut être mise en évidence par la technique de chromatographie par perméation de gel et par la formation de micelles en milieu aqueux.

### Exemple 6A : Préparation d'un copolymère greffé selon l'invention par transestérification

Un copolymère à structure greffé PMM 2.1.2 - POE a été obtenu par transestérification d'un poly(oxyéthylène) monométhyléther sur les chaînes latérales esters d'un poly(méthylidène malonate) pré-synthétisé.

Les réactifs suivants ont été utilisés :
Solvant: THF, 150 ml
PMM 2.1.2 (Mn = 30.000 g/mol) : 2 g
Amorceur : diphénylhexyllithium (0,02M/THF) : 3,3 ml
POE monométhyléther Mn = 2.000 g/mol : 0,15 g

Le protocole suivant a été mis en oeuvre.

Le THF est fraîchement cryodistillé dans le réacteur de polymérisation à-70°C.

Le diphénylhexyllithium est ensuite introduit et on laisse remonter la température à environ 15°C.

Le POE monométhyléther est alors ajouté. La décoloration de l'amorceur, rouge sombre au départ est immédiate.

Le PMM 2.1.2, synthétisé par voie anionique dans le THF à - 70°C et en utilisant également le diphénylhexyllithium comme amorceur est alors introduit dans le réacteur où se trouve l'alcoolate.

Après 3 heures de réaction, la polymérisation est stoppée par ajout de 1 ml de méthanol et le polymère est récupéré après évaporation sous vide du solvant de réaction.

### Exemple 7 : Utilisation des copolymères selon l'invention pour l'obtention de micelles dans l'eau

Obtention de micelles dans l'eau après dialyse d'une solution de copolymères dans un mélange initial THF/MeOH/H₂O de composition 2/1/1 en volume.

Cet exemple a pour but de mettre en évidence les propriétés tensio-actives des copolymères POE-PMM 2.1.2 dans l'eau, par formation de micelles qui par elles-mêmes peuvent constituer des vecteurs de principe actif.

La dialyse est réalisée à travers une membrane (SPECTRA POR ref 132 638, porosité 1.000 Daltons) ne permettant qu'un échange de solvant mais évitant que le copolymère ne la traverse. La dialyse conduit à un enrichissement progressif en eau à l'intérieur du volume délimitée par la membrane.

La taille des micelles obtenues est donnée au tableau suivant :

| **Copolymères (*) nb unité OE/nb unité MM 212** | **Concentration de la solution dialysée (g/l)** | **Diamètre moyen en unité de poids (Dw) et déviation standard (SD) (exprimés en nm)** |
|---|---|---|
| OE 84 -MM 13 | 3.5 | Dw = 36.5 ± 0.4 SD=7 |
| OE 84-MM 23 | 4.5 | Dw= 40.6 ±0.1 SD=5 |
| OE 114-MM 13 | 4.0 | Dw= 33.8 ±1.4 SD= 12 |
| OE114 -MM 8 | 6.8 | Dw = 80.2 ±3.2 SD = 24 |

| | | |
|---|---|---|
| (*): les copolymères sont obtenus selon le procédé décrit dans les exemples 1 et 2 OEx.MMy = copolymère possédant x motifs OE et y motifs MM 2.1.2 | | |

### Exemple 8 : Utilisation des copolymères selon l'invention pour la stabilisation d'une émulsion eau-dans-huile (E/H)

Des émulsions sont réalisées en ajoutant 1 ml d'eau dans une solution de 10 ml d'acétate d'éthyle contenant une quantité prédéterminée de copolymère.

Le mélange est émulsifié durant 5 minutes à l'aide d'un Ultra Turrax JANKE & KUNKEL T25 à la vitesse de 13.000 tr/mn.

La stabilité des émulsions est évaluée visuellement et à l'aide d'un dispositif optique de type TURBISCAN MA 1.000.

Un exemple de comparaison est réalisée en utilisant un polymère de type PLURONIC® .

Les caractéristiques des émulsions sont rassemblées dans le tableau ci-dessous :

| **Copolymères* étudiés** | **% POE massique** | **HLB selon GRIFFIN**** | **Durée de sédimentation de l'émulsion (heures)** |
|---|---|---|---|
| PLURONIC F68 (ref) | 80 | 16 | 24 |
| OE 91 - MM 3 | 85.3 | 17 | 40 |
| OE 114 - MM 10 | 68.5 | 14 | 50 |
| OE 114 - MM 13 | 62.6 | 12.5 | 170 |
| OE 84 - MM 13 | 55.3 | 11 | 400 |
| OE 84 - MM 23 | 41.1 | 8 | >450 |

| | | | |
|---|---|---|---|
| (**) : Relation empirique de GRIFFIN (1954) : HLB = 20 (poids moléculaire des fonctions hydrophiles) / (poids moléculaire total). | | | |
| (*) : OEx.MMy = copolymère possédant x motifs OE et y motifs MM 2.1.2 | | | |

### Exemple 9 : Mesure de tension superficielle de solution aqueuse de copolymères PMM212.POE

Dans le but de vérifier le caractère tensioactif des copolymères synthétisés, des mesures de tension superficielle sont réalisées sur des solutions aqueuses de copolymères de concentration 10 g/l, obtenues par dissolution directe du copolymère dans l'eau. Les solutions sont laissées au repos 12 heures avant d'être étudiées.

Les mesures ont été réalisées à 20°C, à l'aide d'un appareil TENSIMAT® n3 (Prolabo) en utilisant une lame de platine

| **Solution** | **Tension superficielle (mN/m)** |
|---|---|
| Eau pure | 72 |
| Pluronic F68 | 46 |
| OE 114-MM 13* | 44 |
| OE 84-MM 13* | 40 |
| OE 84-MM 23* | 41 |

| | |
|---|---|
| (*) : nb unité OE/nb unité MM212. Les copolymères sont obtenus selon le procédé décrit dans les exemples 1 et 2. | |

### Exemple 10

Des calculs d'énergies superficielles de films de copolymères, déposés sur une lame de verre, ont été effectués par mouillabilité (méthode de la goutte posée) avec un appareil NFT Communication (MONTS, France), par mesure d'angle de contact O de liquides (eau pure, Prolabo, éthylène glycol, formamide, glycérol, diiodométhane et le bromo-1-naphtalène, Sigma-Aldrich) de tension superficielle connue.

Les résultats obtenus sont comparés à ceux d'un film de matériau hydrophobe, le PMM 2.1.2.

| **Matériau*** | **γdispersive (γ**^{**D**}**)** | **γpolaire (γ**^{**D**}**)** |
|---|---|---|
| PMM 2.1.2 | 39 | 4.5 |
| OE 84 -MM 13 | 39 | 11 |
| OE 114 -MM 10 | 41 | 13 |
| OE 91 - MM 3 | 42 | 13 |

| | | |
|---|---|---|
| (*) : OEx-MMy : copolymère possédant x motifs OE et y motifs MM 2.1.2 | | |

Il peut être constaté que la composante de l'énergie superficielle caractéristique de l'hydrophilie, γ^{P} augmente avec le pourcentage en OE dans les différents copolymères.

### Exemple 11

Dans le but de vérifier le caractère inhibiteur d'adsorption de biomolécules ou de cellules des copolymères selon l'invention des calculs d'énergie superficielle par mouillabilité (méthode de la goutte posée) avec un appareil NFT Communication (Monts, France) ont été réalisés sur des films secs de copolymères seuls et après avoir été mis en contact de solutions aqueuses de biomolécules (Chicken egg ovalbumine, Aldrich).

A chaque fois, une comparaison avec un matériau hydrophobe, le PMM 2.1.2 est réalisée:

| | **Copolymères seuls** | | **Copolymères en présence d'ovalbumine** | |
|---|---|---|---|---|
| **Matériau*** | **γ dispersive (γ**^{**D**}**)** | **γ polaire (γ**^{**P**}**)** | **γ dispersive** | **γ polaire** |
| PMM 2.1.2 | 39 | 4,5 | 40 | 15 |
| OE 84 - MM 13 | 39 | 11 | 40 | 12 |
| OE 114 - MM 10 | 41 | 13 | 42 | 10 |
| OE 91 - MM 3 | 42 | 13 | 41 | 11 |

| | | | | |
|---|---|---|---|---|
| (*) : OEx-MMy : copolymère possédant x motifs OE et y motifs MM 2.1.2 | | | | |

On constate que l'augmentation du pourcentage d'oxyde d'éthylène diminue les variations des valeurs des composantes de l'énergie superficielle mesurée en présence et en absence d'ovalbumine. Le taux d'adsorption des biomolécules sur le film de copolymère est alors plus faible.

### Exemple 12 : Utilisation des copolymères selon l'invention pour l'obtention de nanoparticules dans l'eau

Les propriétés tensioactives des copolymères selon l'invention sont ici mises à profit pour permettre la stabilisation de particules de PMM 2.1.2 hydrophobes de dimension nanométrique en milieu aqueux. Les nanoparticules sont obtenues par dispersion de 200 mg de polymère PMM 2.1.2 dissous dans 2 ml d'acétone dans un milieu aqueux (10 ml, eau distillé) contenant le copolymère POE-PMM 2.1.2 (36 % massique en MM 2.1.2) sous bonne agitation.

Les diamètres moyens des particules ont été déterminés à l'aide d'un appareillage Coultronics de type Coulter N4, à 20°C.

Les résultats obtenus sont les suivants :

| **% en PMM 2.1.2 - POE*** | **Diamètre moyen des particules (nm)** |
|---|---|
| 0,5 | 161+/-40 |
| 1 | 220 +/- 60 |
| 2 | 240 +/- 70 |

| | |
|---|---|
| (*) : exprimé en g pour 100 ml de phase aqueuse | |

Ces résultats montrent que les copolymères conformes à l'invention présentent des propriétés tensioactives qui leur permettent de stabiliser une suspension de nanoparticules dans l'eau en l'absence de tout autre tensioactif ou colloïde protecteur.

### Exemple 13A : Formulation de nanoparticules de PMM 2.1.2 stabilisées par un copolymère PMM 2.1.2 - POE selon l'invention chargées en cyclosporine A

Le protocole expérimental suivant a été mis en oeuvre :
- Milieu de polymérisation :: Eau osmosée pH 6.3 = 5 ml
- Phase acétonique :: - MM 2.1.2 = 50 mg
- PMM 2.1.2-POE =100 mg
- Acétone = 1ml
- Cyclosporine A :: 5 mg de cyclosporine non radiomarquée (froide)/500 µl éthanol et cyclosporine A tritiée (4,4 µCi)

On disperse la phase acétonique dans l'eau sous agitation magnétique ( 1.000 tpm). 30 min après le début de la polymérisation, on ajoute le mélange cyclosporine A froide/cyclosporine A chaude (radiomarquée). La durée de la polymérisation est de 18 heures.

Le diamètre moyen des particules mesuré au moyen d'un appareil Nanosizer (Coultronics, France) est de 206 nm +/- 41 nm (moyenne de 3 mesures).

La détermination du taux de fixation de la cyclosporine A est réalisée de la manière suivante :
- Méthode : comptage en scintillation liquide (Compteur Beckman LS 6000 TA).
- Liquide de scintillation : Ultima Gold* (Packard).
- Ultracentrifugation de 1 ml de la suspension à 140.000 g pendant 45 min.
- Mesure de la radioactivité dans 200 µl de surnageant et 200 µl de suspension totale.

Le taux de fixation de la cyclosporine A ainsi mesuré correspondant au pourcentage de principe actif retrouvé dans les nanoparticules par rapport à la quantité initialement introduite est de 50 % +/- 3 %.

### Exemple 13B : Formulation de nanoparticules de PMM 2.1.2 stabilisées par un copolymère PMM 2.1.2 - POE selon l'invention chargées en doxorubicine

Le protocole expérimental suivant a été mis en oeuvre :
- Milieu de polymérisation :: Eau osmosée pH 6.3 = 5 ml doxorubicine = 4 mg
- Phase acétonique :: - MM 2.1.2 = 50 mg
- PMM 2.1.2-POE =100 mg
- Acétone = 1ml

On dissout de la doxorubicine dans l'eau. Ensuite, on disperse la phase acétonique dans la phase aqueuse sous agitation magnétique ( 1.000 tpm). La durée de la polymérisation est de 18 heures.

Le diamètre moyen des particules mesuré au moyen d'un appareil Nanosizer (Coultronics, France) est de 179 nm +/- 28 nm (moyenne de 3 mesures).

La détermination du taux d'encapsulation de la doxorubicine est réalisée de la manière suivante :
- Méthode : HPLC ; colonne C18 ; Phase mobile : Méthanol / Acétate d'éthyle / Acide acétique : 70 : 28,7 : 1,3.
- Ultracentrifugation de 1 ml de la suspension à 140.000 g pendant 45 min.
- Détermination de la concentration en doxorubicine dans la suspension totale et dans le surnageant.

Le taux d'encapsulation de la doxorubicine ainsi mesuré correspondant au pourcentage de principe actif retrouvé dans les nanoparticules par rapport à la quantité initialement introduite est de 43 %.

### Exemple 13C : Formulation de nanonarticules de PMM 2.1.2 stabilisées par un copolymère PMM 2.1.2 - POE selon l'invention chargées en conjugué Peptide V3/Ovalbumine

Le protocole expérimental suivant a été mis en oeuvre :
- Milieu de polymérisation :: Eau osmosée pH 6.3 = 5 ml
Peptide V3/Ovalbumine = 1,15 mg et 0,6 mg respectivement
- Phase acétonique :: - MM 2.1.2 = 50 mg
- PMM 2.1.2-POE =100 mg
- Acétone = 1ml

Le conjugué Peptide V3/Ovalbumine est reçu sous forme de suspension aqueuse dans du PBS à la concentration de 2,3 mg de peptide et 1,2 mg d'ovalbumine par ml de suspension. La concentration du conjugué dans la suspension de nanoparticules est donc de 0,23 mg de peptide V3 et 0,12 mg d'ovalbumine par ml.

On additionne la phase acétonique dans la phase aqueuse sous agitation magnétique (1.000 tpm). La durée de la polymérisation est de 18 heures.

Le diamètre moyen des particules mesuré au moyen d'un appareil Nanosizer (Coultronics. France) est de 161 nm +/- 19 nm (moyenne de 3 mesures).

La détermination du taux d'encapsulation du conjugué Peptide V3/Ovalbumine est réalisée de la manière suivante :
- Méthode : HPLC en gradient sur colonne C18 après dégradation des nanoparticules et analyse des acides aminés. Phase mobile A : CH₃COONa 0,05M pH 5,1 ; Phase mobile B : Acétonitrile/Eau (60:40) ; Détecteur UV : λ = 254 nm.
- Ultracentrifugation de 1 ml de la suspension à 140.000 g pendant 45 min.
- HPLC sur le résidu de dégradation de la suspension totale et du surnageant.

Le taux d'encapsulation du conjugué Peptide V3/Ovalbumine ainsi mesuré correspondant au pourcentage de principe actif retrouvé dans les nanoparticules par rapport à la quantité initialement introduite est de 48 % +/- 3 %.

### Conclusion générale

Les nanoparticules de PMM 2.1.2 peuvent ainsi être obtenues dans de l'eau osmosée pH 6,3, stabilisée par au minimum 2 % de copolymère PMM 2.1.2-POE. Dans ces conditions opératoires, les principes actifs testés que sont la cyclosporine A, la doxorubicine et le conjugué peptide V3/Ovalbumine ont pu être encapsulés.

## Revendications

1. Copolymères biocompatibles du type comportant au moins une séquence présentant un caractère hydrophile et au moins une séquence présentant un caractère hydrophobe, **caractérisés en ce que** ladite séquence à caractère hydrophobe est formée :
- soit d'un homopolymère constitué d'unités récurrentes répondant à la formule générale (I) suivante : 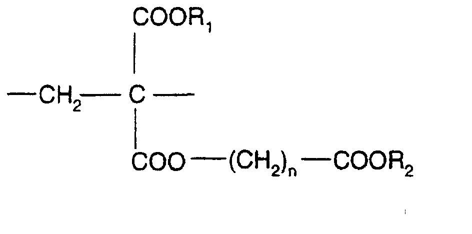 dans laquelle :
- R₁ représente un groupe alkyle ayant de 1 à 6 atomes de carbone ou un groupe (CH₂)ₘ - COOR₃ dans lequel m est un nombre entier compris entre 1 et 5 et R₃ représente un groupe alkyle ayant de 1 à 6 atomes de carbone ;
- R₂ représente un groupe alkyle ayant de 1 à 6 atomes de carbone ; et
- n est un nombre entier compris entre 1 et 5 ;
- soit d'un copolymère statistique constitué d'unités récurrentes différentes répondant à la formule (I) telle que définie précédemment ;
- soit enfin d'un copolymère statistique majoritairement constitué d'unités répondant à la formule (I) telle que définie précédemment.

2. Copolymères selon la revendication 1, **caractérisés en ce que** la séquence à caractère hydrophobe précitée est constituée d'unités récurrentes répondant à la formule générale (I) précitée dans laquelle :
R₁ représente un groupe alkyle ayant de 1 à 6 atomes de carbone ;
R₂ représente un groupe alkyle ayant de 1 à 6 atomes de carbone ; et
n est un nombre égal à 1.

3. Copolymères selon la revendication 1, **caractérisés en ce que** la séquence à caractère hydrophobe précitée est constituée d'unités récurrentes répondant à la formule :

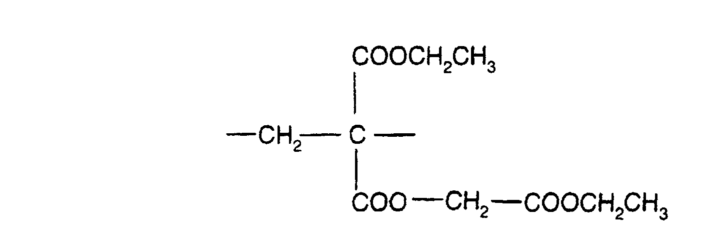

4. Copolymères selon l'une des revendications 1 à 3, **caractérisés en ce que** la séquence à caractère hydrophile précitée est choisie parmi un poly(oxyéthylène), un poly(alcoolvinylique), une poly(vinylpyrrolidone), un poly(N-2 hydroxypropyl méthacrylamide), un poly(hydroxyéthylméthacrylate), un poly(amino acide) hydrophile tel qu'une polylysine, un polysaccharide.

5. Copolymères selon l'une des revendications 1 à 4, **caractérisés en ce qu'**ils présentent une structure à blocs, de préférence di-blocs ou tri-blocs, ou une structure greffée.

6. Copolymères selon l'une des revendications 1 à 5, **caractérisés en ce qu'**ils présentent une teneur pondérale en séquence à caractère hydrophobe comprise entre 5 et 95 %, de préférence entre 10 et 90 %.

7. Copolymères selon l'une des revendications 1 à 6, **caractérisés en ce que** la masse molaire totale des séquences à caractère hydrophobe est comprise entre 1.000 et 80.000 g/mol, et de préférence entre 1.000 et 50.000 g/mol.

8. Utilisation des copolymères selon l'une quelconque des revendications 1 à 7 pour la préparation de systèmes micellaires, d'émulsions, pour la préparation ou la stabilisation de nano particules, ou pour l'encapsulation de substances actives.

9. Utilisation des copolymères selon l'une quelconque des revendications 1 à 7 comme agents de traitement de surface de matériaux ou de biomatériaux en particulier pour conférer par ancrage desdits copolymères un caractère hydrophile aux surfaces traitées.

10. Utilisation des copolymères selon l'une quelconque des revendications 1 à 7 comme agents de traitement de surface de matériaux ou de biomatériaux susceptibles d'entrer en contact avec des tissus animaux, des cellules ou des biomolécules, en particulier pour minimiser l'adhésion interfaciale avec lesdits tissus animaux, cellules ou biomolécules.

## Claims

1. Biocompatible copolymers of the type comprising at least one sequence having a hydrophilic character and at least one sequence having a hydrophobic character, **characterised in that** said sequence having hydrophobic character is formed :
- either from a homopolymer constituted of recurring units of the following general formula : 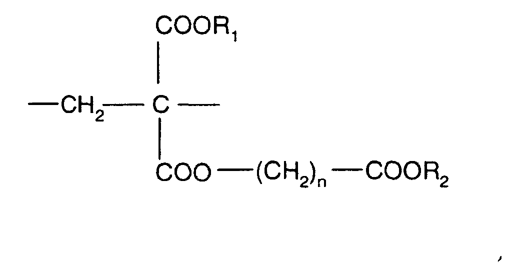 in which :
- R₁ represents an alkyl group having 1 to 6 carbon atoms or a (CH₂)ₘ-COOR₃ group in which m is an integer between 1 and 5 and R₃ represents an alkyl group having 1 to 6 carbon atoms ;
- R₂ represents an alkyl group having 1 to 6 carbon atoms ; and
- n is an integer between 1 and 5 ;
- or from a random copolymer constituted of different recurring units of formula (I) as defined above ;
- or, finally, from a random copolymer constituted mainly of units of formula (I) as defined above.

2. The copolymers according to claim 1, **characterised in that** the above-mentioned sequence having hydrophobic character is constituted of recurring units of the above-mentioned general formula (I) in which :
R₁ represents an alkyl group having 1 to 6 carbon atoms ;
R₂ represents an alkyl group having I to 6 carbon atoms ; and
n is a number equal to 1.

3. The copolymers according to claim 1, **characterised in that** the above-mentioned sequence having hydrophobic character is constituted of recurring units of formula :

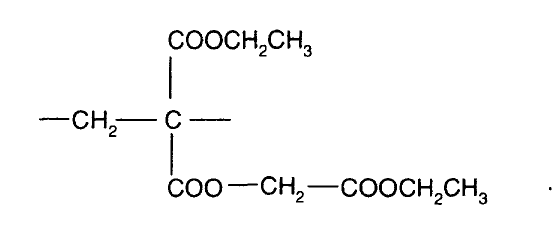

4. The copolymers according to one of claims 1 to 3, **characterised in that** the above-mentioned sequence having hydrophilic character is selected from a poly(oxyethylene), a poly(vinyl alcohol), a poly(vinylpyrrolidone), a poly(N-2 hydroxypropyl methacrylamide), a poly(hydroxyethyl methacrylate), a hydrophilic poly(amino acid) such as a polylysine, and a polysaccharide.

5. The copolymers according to one of claims 1 to 4, **characterised in that** they have a block structure, preferably a di-block or tri-block structure, or a grafted structure.

6. The copolymers according to one of claims 1 to 5, **characterised in that** they have a content by weight of sequence having hydrophobic character of between 5 and 95 %, preferably of between 10 and 90 %.

7. The copolymers according to one of claims 1 to 6, **characterised in that** the total molar mass of the sequences having hydrophobic character is between 1,000 and 80,000 g/mol, and preferably between 1,000 and 50,000 g/mol.

8. Use of the copolymers according to any one of claims 1 to 7 for preparing micellar systems, emulsions, for preparing or stabilising nanoparticles, or for encapsulating active substances.

9. Use of the copolymers according to any one of claims 1 to 7 as agents for treating the surface of materials or biomaterials, particularly for conferring a hydrophilic character to the treated surfaces by anchoring of said copolymers.

10. Use of the copolymers according to any one of claims 1 to 7 as agents for treating the surface of materials or biomaterials which may come into contact with animal tissues, cells or biomolecules, particularly for minimising the interfacial adhesion with said animal tissues, cells or biomolecules.

## Patentansprüche

1. Biokompatible Copolymere, die mindestens eine Sequenz, umfassen, die einen hydrophilen Charakter aufweist, und mindestens eine Sequenz, die einen hydrophoben Charakter aufweist, **dadurch gekennzeichnet, dass** die Sequenz mit hydrophobem Charakter gebildet wird:
- entweder aus einem Homopolymer, das aus sich wiederholenden Einheiten der folgenden allgemeinen Formel (I) besteht: 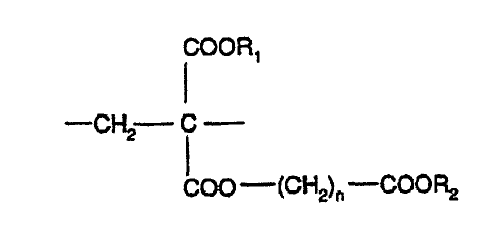 wobei:
- R₁ einen Alkylrest, der 1 bis 6 Kohlenstoffatome aufweist, oder einen Rest (CH₂)ₘ-COOR₃ darstellt, wobei m eine ganze Zahl zwischen 1 und 5 ist und R₃ einen Alkylrest darstellt, der 1 bis 6 Kohlenstoffatome aufweist;
- R₂ einen Alkylrest darstellt, der 1 bis 6 Kohlenstoffatome aufweist; und
- n eine ganze Zahl zwischen 1 und 5 ist;
- oder aus einem statistischen Copolymer, das aus unterschiedlichen sich wiederholenden Einheiten der wie vorstehend definierten Formel (I) besteht;
- oder aber aus einem statistischen Copolymer, das hauptsächlich aus Einheiten der wie vorstehend definierten Formel (I) besteht.

2. Copolymere gemäß Anspruch 1, **dadurch gekennzeichnet, dass** die Sequenz mit hydrophobem Charakter aus sich wiederholenden Einheiten der allgemeinen Formel (I) besteht, wobei:
- R₁ einen Alkylrest darstellt, der 1 bis 6 Kohlenstoffatome aufweist;
- R₂ einen Alkylrest darstellt, der 1 bis 6 Kohlenstoffatome aufweist; und
- n eine Zahl gleich 1 ist.

3. Copolymere gemäß Anspruch 1, **dadurch gekennzeichnet, dass** die Sequenz mit hydrophobem Charakter aus sich wiederholenden Einheiten der folgenden Formel besteht:

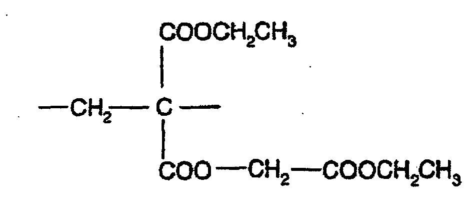

4. Copolymere gemäß einem der Ansprüche 1 bis 3, **dadurch gekennzeichnet, dass** die Sequenz mit hydrophilem Charakter aus einem Poly(oxyethylen), einem Poly(vinylalkohol), einem Poly(vinylpyrrolidon), einem Poly(N-2-hydroxypropylmethacrylamid), einem Poly(hydroxyethylmethacrylat), einer hydrophilen Poly(aminosäure) wie Polylysin und einem Polysaccharid ausgewählt ist

5. Copolymere gemäß einem der Ansprüche 1 bis 4, **dadurch gekennzeichnet, dass** sie eine Blockstruktur, vorzugsweise mit Zweier- oder Dreierblöcken, oder eine Pfropfstruktur aufweisen.

6. Copolymere gemäß einem der Ansprüche 1 bis 5, **dadurch gekennzeichnet, dass** sie einen Gehalt der Sequenz mit hydrophobem Charakter von zwischen 5 und 95 Gew.-%, vorzugsweise zwischen 10 und 90 Gew.-%, aufweisen.

7. Copolymere gemäß einem der Ansprüche 1 bis 6, **dadurch gekennzeichnet, dass** die gesamte Molmasse der Sequenzen mit hydrophobem Charakter zwischen 1.000 und 80.000 g/mol, vorzugsweise zwischen 1.000 und 50.000 g/mol, liegt.

8. Verwendung der Copolymere gemäß einem der Ansprüche 1 bis 7 zur Herstellung von mizellaren Systemen, von Emulsionen, zur Herstellung oder Stabilisierung von Nanopartikeln oder zur Verkapselung von Wirkstoffen.

9. Verwendung der Copolymere gemäß einem der Ansprüche 1 bis 7 als Mittel zur Behandlung von Oberflächen von Materialien oder Biomaterialien, insbesondere um den behandelten Oberflächen durch die Verankerung der Copolymere einen hydrophilen Charakter zu verleihen.

10. Verwendung der Copolymere gemäß einem der Ansprüche 1 bis 7 als Mittel zur Behandlung von Oberflächen von Materialien oder Biomaterialien, die mit tierischen Geweben, Zellen oder Biomolekülen in Kontakt kommen können, insbesondere um die Grenzflächenadhäsion mit den tierischen Geweben, Zellen oder Biomolekülen zu minimieren.
